# EUROPÄISCHE PATENTSCHRIFT

(11) **EP 3 997 405 B1**
(45) Veröffentlichungstag und Bekanntmachung des Hinweises auf die Patenterteilung: **03.04.2024**
(21) Anmeldenummer: 20756779.3
(22) Anmeldetag: 29.07.2020
(51) Int. Cl.: F28D 20/00

(54) **WÄRMESPEICHERVORRICHTUNG, WÄRMESPEICHERSYSTEM UND VERFAHREN ZUM BETREIBEN EINER WÄRMESPEICHERVORRICHTUNG**
HEAT STORAGE DEVICE, HEAT STORAGE SYSTEM AND METHOD FOR OPERATING A HEAT STORAGE DEVICE
DISPOSITIF DE STOCKAGE DE CHALEUR, SYSTÈME DE STOCKAGE DE CHALEUR ET PROCÉDÉ POUR FAIRE FONCTIONNER UN DISPOSITIF DE STOCKAGE DE CHALEUR

(30) Priorität: 29.07.2019 DE 102019120448
(43) Veröffentlichungstag der Anmeldung: 18.05.2022
(73) Patentinhaber: Kraftanlagen München GmbH, 80339 München (DE)
(72) Erfinder: DOERBECK, Till, 83026 Rosenheim (DE)
(74) Vertreter: advotec.
(86) Internationale Anmeldenummer: PCT/EP2020/071373
(87) Internationale Veröffentlichungsnummer: WO 2021/018949

(56) Entgegenhaltungen:
- CN-A- 107 246 732
- US-A- 2 856 506
- US-A- 4 286 141

## Beschreibung

Die Erfindung betrifft eine Wärmespeichervorrichtung. Ferner betrifft die Erfindung ein Wärmespeichersystem. Überdies betrifft die Erfindung ein Verfahren zum Betreiben einer Wärmespeichervorrichtung. Insbesondere, betrifft die vorliegende Erfindung eine Wärmespeichervorrichtung, wie im Oberbegriff des Anspruchs 1 definiert, und wie in CN 107 246 732 A offenbart.

Nach dem Stand der Technik sind Wärmespeichervorrichtungen seit langem bekannt. Wärmespeicher sind Speicher für thermische Energie (Energiespeicher). Wärmespeicher können in unterschiedlichen Größen errichtet werden, die von dezentralen Kleinanlagen bis zu großen zentralen Speichern reichen. Sie sind sowohl als kurzfristige wie auch als saisonale Speicher verfügbar und können je nach Bauart Niedertemperaturwärme zur Raumheizung oder Hochtemperaturwärme für industrielle Anwendungen aufnehmen und wieder abgeben. Neben der Speicherung von thermischer Energie besteht das wichtige Ziel bei Wärmespeichern daher, die Entstehung und die Nutzung von Wärme zeitlich zu entkoppeln.

Aus der DE 10 2017 217 963 A1 sind eine Wärmespeichervorrichtung und ein Verfahren zum Speichern von Wärme bekannt. Derartige Vorrichtungen und Verfahren kommen insbesondere bei zumindest teilweise elektrisch betriebenen Kraftfahrzeugen (Elektrofahrzeugen) zum Einsatz, um einen im Fahrbetrieb erforderlichen Wärmebedarf möglichst mit gespeicherter Wärme zu decken und somit den elektrischen Energiebedarf für nicht antriebsrelevante Komponenten zu minimieren.

Die Wärmespeichervorrichtungen aus dem Stand der Technik weisen eine Wärmespeicherleistung auf, die noch verbesserbar ist. Mit anderen Worten ist der Wirkungsgrad der bekannten Wärmespeichervorrichtungen noch erhöhbar.

Der vorliegenden Erfindung liegt daher die Aufgabe zugrunde die aus dem Stand der Technik bekannten Nachteile zu überwinden.

Diese Aufgabe wird durch eine Wärmespeichervorrichtung mit den Merkmalen des Anspruchs 1, durch ein Wärmespeichersystem umfassend mindestens eine Wärmespeichervorrichtung mit den Merkmalen des Anspruchs 9 und durch ein Verfahren zum Betreiben einer Wärmespeichervorrichtung mit den Merkmalen des Anspruchs 11 gelöst.

Die erfindungsgemäße Wärmespeichervorrichtung umfasst einen mindestens zwei Öffnungen aufweisenden Speicherbehälter zur Wärmespeicherung, wobei im Speicherbehälter mindestens ein Heizelement und mindestens ein Wärmespeichermittel angeordnet sind. Mit anderen Worten befindet sich neben dem Wärmespeichermittel zusätzlich ein Heizelement innerhalb des Speicherbehälters der Wärmespeichervorrichtung.

Dabei weist die Wärmespeichervorrichtung eine Halterungsmatrix zur Auflagerung des Heizelements auf. Durch das Vorsehen der Halterungsmatrix ist es auf einfache Weise möglich, das mindestens eine Heizelement aufzulagern. Ferner lassen sich mehrere Heizelement in definiertem Abstand zueinander positionieren.

Vorzugsweise ist die Halterungsmatrix zwischen dem mindestens einen Heizelement und dem mindestens einen Wärmespeichermittel angeordnet. Bevorzugt umfasst das Wärmespeichermittel die Halterungsmatrix. Mit anderen Worten kann die die Halterungsmatrix Bestandteil des Wärmespeichermittels sein. Besonders bevorzugt weist die Halterungsmatrix einen Versatz zur Aufnahme des mindestens einen Heizelements auf. Hierdurch lassen sich Heizelemente auf einfache Weise auflagern. Unter einer Halterungsmatrix kann eine Halterung oder ein Träger verstanden werden. Die Halterung bzw. der Träger können zur Aufnahme des mindestens einen Heizelements eingerichtet sein.

Weiter vorzugsweise weist die Halterungsmatrix eine Mehrzahl an in einer von der Halterungsmatrix aufgespannten Ebene horizontal und/oder vertikal verlaufenden Komponenten, insbesondere Streben, auf. Weiter bevorzugt weist die Halterungsmatrix einen Rahmen auf, der die erwähnten Komponenten aufnimmt bzw. diese umgibt oder umschließt. Die Halterungsmatrix kann auch als eine Gitterstruktur ausgebildet sein.

Besonders bevorzugt ist mindestens ein Kabel oder Draht für die Stromversorgung der Heizelemente durch die Halterungsmatrix, insbesondere die Komponenten, geführt.

Unter einer Wärmespeichervorrichtung wird ein Speicher für thermische Energie verstanden. Vorzugsweise ist das Heizelement eine Komponente einer Heizvorrichtung, wobei das Heizelement mittels einer Stromversorgung der Heizvorrichtung betreibbar ist. Bevorzugt weist der Wärmespeicherbehälter eine Dämmung auf. Der Wärmespeicherbehälter kann als Speicherbehälter verstanden werden.

Die Wärmespeichervorrichtung kann zum Einsatz kommen, um überschüssige elektrische Energie aus stark schwankenden regenerativen Quellen (wie zum Beispiel Wind oder Photovoltaik) oder angeschlossenen Stromnetzen effizient in Form von Wärme auf einem hohen Temperaturniveau zu speichern. Hierdurch ist eine Stabilisierung des Stromnetzes gewährleistet. Die innerhalb des Speicherbehälters gespeicherte Wärme kann zu einem späteren Zeitpunkt, z. B. zur bedarfsgerechten Umwandlung in elektrischen Strom durch beispielsweise einen Wasserdampf-Prozess, ORC, etc., verwendet oder an einen Prozess (Industriewärmeversorgung) abgegeben werden.

Vorzugsweise gilt für einen Wärmeeintrag in den Speicherbehälter, dass
- die Wärmespeichervorrichtung eingerichtet ist, über mindestens eine erste Öffnung ein Gas in den Speicherbehälter zu fördern,
- das Heizelement eingerichtet ist, das geförderte Gas aufzuheizen,
- die Speichermittel, die dem Heizelement nachgeschaltet sind, eingerichtet sind, die Wärme des aufgeheizten Gases zu speichern und
- die Wärmespeichervorrichtung eingerichtet ist, das die Wärme an die Speichermittel abgegebene Gas, das folglich abgekühlt ist, über mindestens eine zweite Öffnung wieder aus dem Speicherbehälter zu fördern.

Das beim Wärmeeintrag in den Speicherbehälter über die mindestens eine erste Öffnung geförderte Gas weist vorzugsweise eine Temperatur ≤ 120° auf.

Damit ist die Wärmespeichervorrichtung eingerichtet, ein Gas, vorzugsweise Luft, bzw. einen Gasstrom, vorzugsweise Luftstrom, unter Einsatz von elektrischer Energie mit möglichst hoher Effizienz direkt innerhalb des thermischen Speicherbehälters zu erhitzen. Besonders bevorzugt wird das Gas auf ca. 1.000°C erhitzt. Das hieraus erzeugte Heißgas durchströmt anschließend die Wärmespeichermittel, um seine Wärme an diese abzugeben.

Mit anderen Worten ermöglicht die Wärmespeichervorrichtung, einen Gasstrom von der ersten Öffnung durch den Speicherbehälter in Richtung zur zweiten Öffnung zu fördern. Dabei wird das Gas von dem Heizelement erhitzt und zu den Speichermitteln geführt. Die Wärme wird dort von dem Gas auf das Wärmespeichermittel übertragen und von diesen gespeichert.

Vorzugsweise sind die Wärmespeichermittel übereinander geschichtete Formsteine. Bevorzugt sind die erste Öffnung und die zweite Öffnung an einen Kreislauf angeschlossen.

Besonders bevorzugt können neben der ersten Öffnung und der zweiten Öffnung noch weitere Öffnungen vorgesehen sein, die einen entsprechenden Gasstromeintritt nach innerhalb des Speicherbehälters oder einen Gasaustritt nach außerhalb des Speicherbehälters ermöglichen.

Vorzugsweise gilt für einen Wärmeaustrag aus dem Speicherbehälter, dass
- die Wärmespeichervorrichtung eingerichtet ist, über die mindestens zweite Öffnung ein Gas in den Speicherbehälter zu fördern,
- die Speichermittel eingerichtet sind, die gespeicherte Wärme an das Gas abzugeben und dieses aufzuheizen und
- die Wärmespeichervorrichtung eingerichtet ist, über die mindestens eine erste Öffnung das aufgeheizte Gas, das das Speichermittel passiert hat, aus dem Speicherbehälter zu fördern.

Das beim Wärmeaustrag aus dem Speicherbehälter über die mindestens eine zweite Öffnung geförderte Gas weist vorzugsweise eine Temperatur ≤ 120° auf.

Die Wärmespeichervorrichtung der Erfindung umfasst in einer Wärmeeintragsrichtung eine erste Gasverteilerkammer, die dem Heizelement vorgeschaltet ist. Weiterhin umfasst die Wärmespeichervorrichtung in einer Wärmeeintragsrichtung eine zweite Gasverteilerkammer, die den Speichermitteln nachgeschaltet ist. Durch das Vorsehen der Gasverteilerkammern ist eine gleichmäßige Verteilung des einströmenden Gases über dem Speicherquerschnitt erzielbar.

Wie oben bereits erwähnt, können neben der ersten Öffnung und der zweiten Öffnung noch weitere Öffnungen vorgesehen sein, die einen entsprechenden Gasstromeintritt nach innerhalb des Speicherbehälters oder einen Gasaustritt nach außerhalb des Speicherbehälters ermöglichen.

Bevorzugt sind Zwischenräume zwischen mindestens zwei benachbarten Heizelementen luftdicht verschlossen. Damit können horizontale Zwischenräume zwischen den Heizelementen, die nicht durchströmt werden sollen verschlossen werden. Dabei sind die Zwischenräume vorzugsweise luftdicht, hitzebeständig und/oder elektrisch isolierend. Als Material kann beispielsweise Schamott oder ein Faserdämmstoff verwendet werden.

Erfindungsgemäss kann ein Strömungsvergleichmäßiger beidseitig des Heizelements angeordnet sein. Unter einem Strömungsvergleichmäßiger kann ein Strömungshomogenisierer verstanden werden. Alternativ kann ein Strömungsvergleichmäßiger beidseitig von mehreren Lagen von Heizelementen sowie zwischen diesen angeordnet sein. Durch das Vorsehen des Strömungsvergleichmäßigers kann eine zusätzliche Vergleichmäßigung des Gasstroms erzielt werden. Der Strömungsvergleichmäßiger kann aus einem keramischen oder aus einem metallischen Material oder einer Kombination verschiedener Materialien beispielsweise in Form einer Schüttung, eines Schaumes, eines Gitters, einer Lochplatte aufgebaut sein. Der Strömungsvergleichmäßiger auf der Oberseite der Heizelemente kann sich bzgl. Material und Aufbau vom Strömungsvergleichmäßiger auf der Unterseite oder zwischen den Heizelementen unterscheiden. Der Strömungsvergleichmäßiger auf der Oberseite der Heizelemente kann zu Wartungszwecken begehbar ausgeführt sein.

Besonders bevorzugt sind mindestens zwei Lagen von Heizelementen aufeinander gestapelt. Durch das Vorsehen mehrerer Lagen von Heizelementen ist es möglich, die installierte thermische Leistung durch Ein- und Ausschalten einzelner Heizelementlagen an stark variierende Gasvolumentröme anzupassen.

Ganz besonders bevorzugt umfasst das mindestens eine vom Gas durchströmbare Heizelement eine elektrisch leitfähige, metallische oder keramische Wabenstruktur. Vorzugsweise ist die Wabenstruktur ein Wabenkörper. Die Wabenstruktur kann einen beliebigen Gesamtquerschnitt haben, wie zum Beispiel den eines Kreises, Rechtecks, Quadrats, Sechsecks, Vielecks oder einer Spirale. Die Einzelkanäle der Wabenstruktur können ebenfalls beliebige Querschnitte, wie zum Beispiel den eines Quadrats, Sechsecks, Kreises oder eine insbesondere mit Wellpappe vergleichbare Wellenform aufweisen. Die Wabenstruktur ist eingerichtet, vom Gas bzw. Gasstrom durchströmt zu werden. Bei aktiviertem Heizelement heizt sich die Wabenstruktur derart auf, dass das die Wabenstruktur durchströmende Gas ebenfalls aufgeheizt wird.

Durch das Vorsehen der Wabenstruktur ergeben sich eine sehr große Oberfläche zur Wärmeübertragung zwischen Heizelement und Gasstrom sowie ein vergrößerter anströmbarer Gesamtquerschnitt. Die daraus resultierenden niedrigen Luftgeschwindigkeiten beim Durchströmen der Heizelemente ergeben in Kombination mit einer vorzugsweise geraden Kanalform der Waben einen minimierten Luftwiderstand. Die Wabenstruktur bzw. die Kanäle der Wabenstruktur werden dabei in Längsrichtung durchströmt. Ferner ergibt sich ein reduzierter elektrischer Eigenbedarf für beispielsweise ein Gebläse im Speicherbetrieb.

Weiter bevorzugt sind die Heizelemente linienförmig angeordnet oder verlaufen mäanderförmig oder spiralförmig. Die Heizelemente sind dabei speicheroberflächenseitig angeordnet bzw. verlaufen speicheroberflächenseitig. Eine linienförmige Anordnung ist zum Beispiel besonders geeignet für baugleiche, rechteckige, langgestreckte Heizelemente in Speicherbehältern mit quadratischem oder rechteckigem Strömungsquerschnitt. Mäanderförmige Anordnungen von in Reihe geschalteten Heizelementen sind besonders geeignet, um die Heizelemente gleichmäßig über einen beliebig geformten, beispielsweise kreisförmigen oder vieleckigen Speicherquerschnitt, zu verteilen. Bei einer spiralförmigen Anordnung ergibt sich die Möglichkeit, mehrere Heizelementgruppen, die jeweils aus in Reihe geschalteten Heizelementen bestehen, als elektrisch parallel geschaltete Spiralarme um einen zentralen elektrischen Anschlusspunkt anzuordnen, so dass sich die Anzahl der erforderlichen Durchdringungen für elektrische Anschlüsse am Speicherbehälter auf ein Minimum reduziert.

Besonders bevorzugt sind die Heizelemente in Reihe und/oder parallel geschaltet. Hierdurch kann je nach Anwendungsfall das entsprechende Heizelement bestromt, d.h. aktiviert, werden. Die Heizelemente können an verfügbare AC/DC Spannungsquellen angeschlossen werden im Mittel- oder Niederspannungsbereich bei z.B. 10 bis 20 kV AC oder 1.000 bis 1.500 V DC bei größeren Anlagen. Die Heizelemente können je nach Form und elektrischem Widerstand in beliebiger Anzahl elektrisch in Reihe und/oder parallel zu Heizelementgruppen zusammengeschaltet werden.

Es können Heizelementgruppen aus Heizelementen gebildet werden, die unabhängig voneinander ein- und ausgeschaltet werden können.

Zusätzlich kann durch ein Ein-/Ausschalten oder durch eine Änderung der Verschaltung der Heizelemente mittels einer Schaltanlage außerhalb des Speicherbehälters die Leistung der einzelnen Heizelemente gezielt verändert werden, um Temperaturunterschiede des Heizgases an der Speicheroberfläche zu minimieren.

Darüber hinaus kann eine Minimierung der thermischen Trägheit des Gesamtsystems erzielt werden, da die Heizelemente ohne eine zusätzliche Einhausung und Wärmedämmung auf den Speichermitteln aufliegen und damit selbst Teil der thermisch nutzbaren Gesamtspeichermasse sind.

Das erfindungsgemäße Wärmespeichersystem umfasst mindestens eine Wärmespeichervorrichtung, wie zuvor beschrieben, wobei die Wärmespeichervorrichtung an einen Wärmeabnehmer angeschlossen ist bzw. mit diesem verbunden ist. Eine Verbindung kann über ein Rohrsystem erreicht werden.

Vorzugsweise kann das Speichersystem ein Rohrleitungssystem mindestens ein Drosselorgan und/oder mindestens ein Gebläse umfassen. Unter einem Drosselorgan kann eine Klappe oder ein Ventil verstanden werden. Unter einem Gebläse kann eine Vorrichtung verstanden werden, die bei Inbetriebnahme das Gas bzw. den Gasstrom beschleunigt.

Das erfindungsgemäße Verfahren zum Betreiben einer Wärmespeichervorrichtung umfasst die aufeinanderfolgenden Schritte zum Wärmeeintrag in den Speicherbehälter:
- Fördern von Gas in den Speicherbehälter durch die erste Öffnung,
- Aufheizen des geförderten Gases mittels des Heizelements,
- Speichern der Wärme des aufgeheizten Gases mittels der Speichermittel und
- Fördern des Gases, das die Wärme an die Speichermittel abgegeben hat durch die zweite Öffnung aus dem Speicherbehälter.

Unter einem Beladen ist ein Wärmeeintrag in den Speicherbehälter zu verstehen. Beim Beladen des Wärmespeichers werden zunächst das mindestens eine Heizelement und anschließend die Speichermittel vertikal von oben nach unten durchströmt. Dabei ist das Heizmittel aktiviert, d.h. mit elektrischem Strom versorgt. Vorzugsweise wird beim Wärmeeintrag ein Gas von einer Temperatur ≤ 120° auf ca. 800°C bis 1000°C erhitzt.

Besonders bevorzugt umfasst das Verfahren zum Betreiben der Wärmespeichervorrichtung die aufeinanderfolgenden Schritte zum Wärmeaustrag aus dem Speicherbehälter:
- Fördern von Gas in den Speicherbehälter durch die zweite Öffnung,
- Abgabe der Wärme von den Speichermitteln an das geförderte Gas und
- Fördern des Gases, das die Wärme an die Speichermittel abgegeben hat, durch die zweite Öffnung aus dem Speicherbehälter.

Unter einem Entladen ist ein Wärmeaustrag aus dem Speicherbehälter zu verstehen. Beim Entladen des Wärmespeichers werden die Speichermittel und die Heizmittel vertikal von unten nach oben durchströmt. Dabei ist das Heizmittel deaktiviert, d.h. es fließt kein Strom. Alternativ kann das Heizmittel auch aktiviert sein, um das austretende Gas weiter zu erhitzen. Vorzugsweise wird beim Wärmeaustrag ein Gas von einer Temperatur ≤ 120° auf ca. 800°C bis 1000°C erhitzt.

Nachfolgend wird die Erfindung unter Bezugnahme auf die beigefügten Zeichnungen näher erläutert. Es zeigen:
- Figur 1: einen schematischen Schnitt durch eine Ausführungsform der erfindungsgemäßen Vorrichtung;
- Figur 2: ein Detail A aus der Figur 1;
- Figur 3: eine schematische Draufsicht auf eine Heizvorrichtung gemäß der Figur 1;
- Figur 4: eine alternative Ausführungsform der Heizvorrichtung aus Figur 1;
- Figur 5: eine weitere alternative Ausführungsform der Heizvorrichtung aus Figur 1;
- Figur 6: ein Detail A aus der Figur 4;
- Figur 7: eine schematische Ansicht einer Ausführungsform eines erfindungsgemäßen Wärmespeichersystems in einem Beladungszustand;
- Figur 8: die Ausführungsform gemäß Figur 7 in einem Entladungszustand; und
- Figur 9: eine schematische Ansicht einer weiteren Ausführungsform des Wärmespeichersystems.

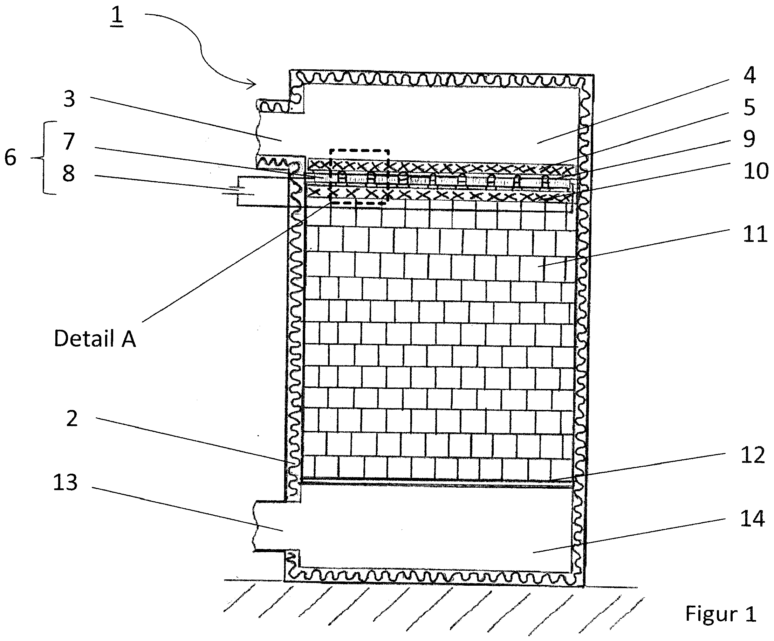

In Figur 1 ist eine Wärmespeichervorrichtung 1 mit einem mindestens zwei Öffnungen 3, 13 aufweisenden Speicherbehälter 2 zur Wärmespeicherung gezeigt. Im Speicherbehälter 2 sind eine Vielzahl von Heizelementen 7 und Wärmespeichermitteln 11 angeordnet. Die Wärmespeichermittel 11 sind übereinander angeordnete Formsteine, die zunächst der Wärmespeicherung bzw. der Wärmeaufnahme dienen.

Einer ersten Öffnung 3 ist in einer Förderrichtung des Gases eine erste Gasverteilerkammer 4 nachgeschaltet. Die Gasverteilerkammer 4 dient der Vergleichmäßigung des einströmenden Gases. Der Gasverteilerkammer 4 folgt ein erster Strömungsvergleichmäßiger 5. Der erste Strömungsvergleichmäßiger 5 dient zusätzlich der Vergleichmäßigung des Gases. Dem ersten Strömungsvergleichmäßiger 5 sind die Heizelemente 7 nachgeschaltet. Dabei sind die Heizelemente 7 Teil einer Heizvorrichtung 6.

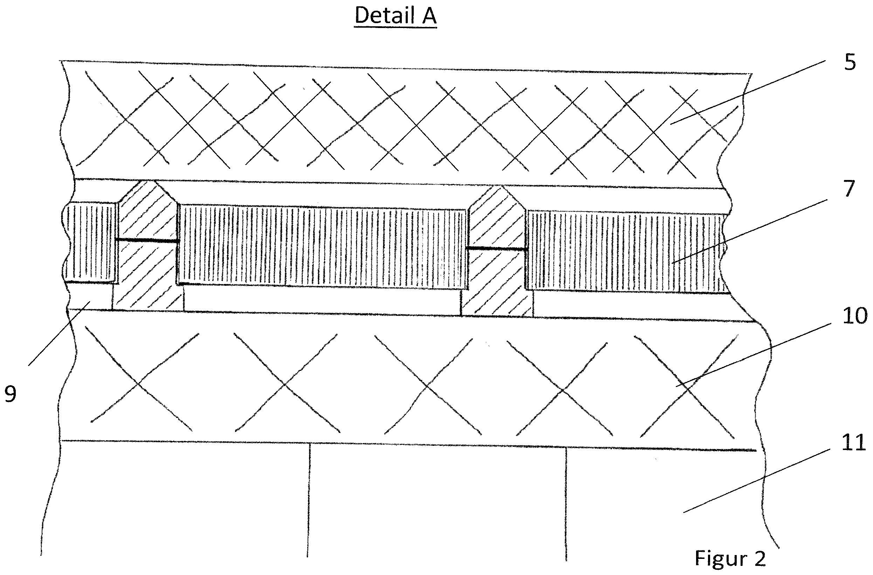

Zur Auflagerung der Heizelemente 7 ist eine Halterungsmatrix 9 vorgesehen, wie in Figur 2 detailliert gezeigt. Zur Versorgung des Heizelements 7 mit Strom weist die Heizvorrichtung 6 zusätzlich eine elektrische Stromversorgung 8 mit Leitungen auf. Der Halterungsmatrix 9 und den Heizelementen 7 ist ein zweiter Strömungsvergleichmäßiger 10 nachgeschaltet. Sowohl der erste Strömungsvergleichmäßiger 5 als auch der zweite Strömungsvergleichmäßiger 10 sind optional.

Im Anschluss an den zweiten Strömungsvergleichmäßiger 10 folgen die Wärmespeichermittel 11. Wie oben bereits angesprochen, sind die Wärmespeichermittel 11 als Formsteine ausgebildet, die im Versatz übereinander gestapelt sind. Zwischen einer zweiten Gasverteilerkammer 14 und den Formsteinen 11 ist eine Halterung 12 vorgesehen. Der zweiten Gasverteilerkammer 14 ist eine zweite Öffnung 13 nachgeschaltet.

Zwischenräume zwischen zwei benachbarten Heizelementen 7 sind luftdicht verschlossen. Als Material für den luftdichten Verschluss können bspw. hitzebeständige und elektrisch isolierende Materialien verwendet werden. Die Heizelemente 7 können dabei in Reihe oder parallel miteinander geschaltet sein.

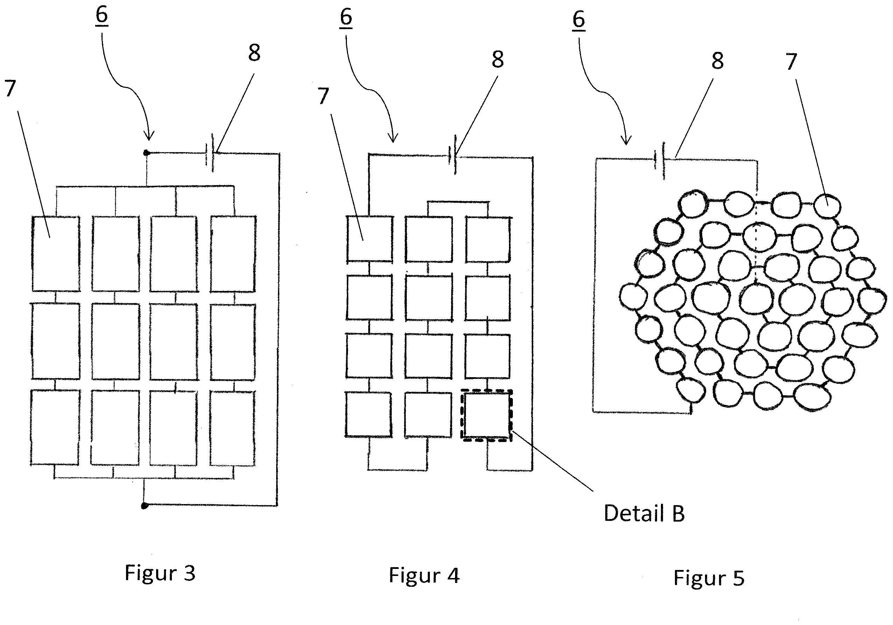

Wie in den Figuren 1 und 2 gezeigt, sind die Heizelemente 7 speicheroberflächenseitig angeordnet. Die Heizelemente 7 können dabei in unterschiedlicher Form angeordnet sein. Gemäß der Figur 3 ist eine Verschaltung gezeigt, bei der vier Reihen von Heizelementen 7 parallel geschaltet sind. Gemäß der Figur 4 sind die Heizelemente 7 hintereinander in Reihe geschaltet, wobei die Heizelemente 7 einen mäanderförmigen Verlauf aufweisen. Gemäß der Figur 5 sind die Heizelemente hintereinander in Reihe geschaltet, wobei die Heizelemente 7 einen spiralförmigen Verlauf aufweisen.

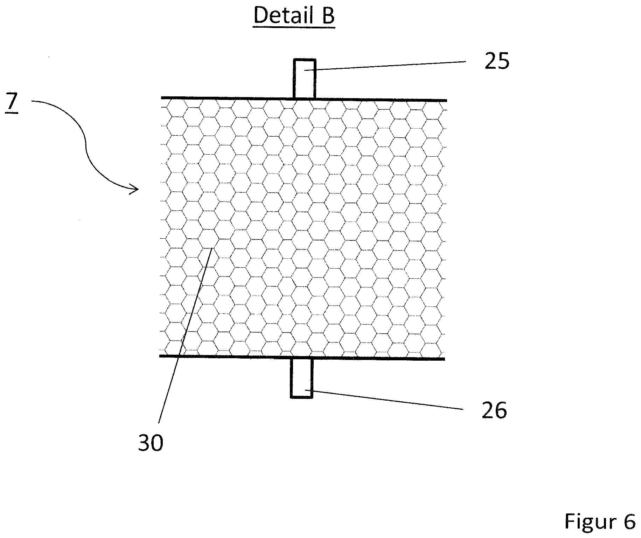

In Figur 6 ist ein Heizelement 7 aus der Figur 4 mit elektrischen Anschlüssen 25, 26 in der Draufsicht gezeigt. Das Heizelement 7 weist einen rechteckigen Querschnitt mit einer Wabenstruktur bzw. einem Wabenkörper 30 mit sechseckigen Kanälen auf. Das Gas bzw. der Gasstrom durchströmt die Wabenstruktur 30 des Heizelements 7 lotrecht bezogen auf die Blattebene, dh. In die Blattebene hinein oder heraus. Mit anderen Worten werden die Wabenstruktur bzw. die Kanäle der Wabenstruktur in Längsrichtung durchströmt. Durch das Vorsehen der Wabenstruktur 30 ergeben sich ein vergrößerter anströmbarer Gesamtquerschnitt, eine große Oberfläche zur Wärmeübertragung sowie ein gerader Kanalverlauf mit geringem Strömungswiderstand. Alternativ sind für den Wabenkörper 30 auch andere Formen denkbar, wie bspw. Kreis, Oval, Rechteck, Vieleck. Für die Wabenkanäle sind auch andere Formen denkbar, wie bspw. Quadrat, Kreis, Sechseck oder eine insbesondere mit Wellpappe vergleichbare Wellenform.

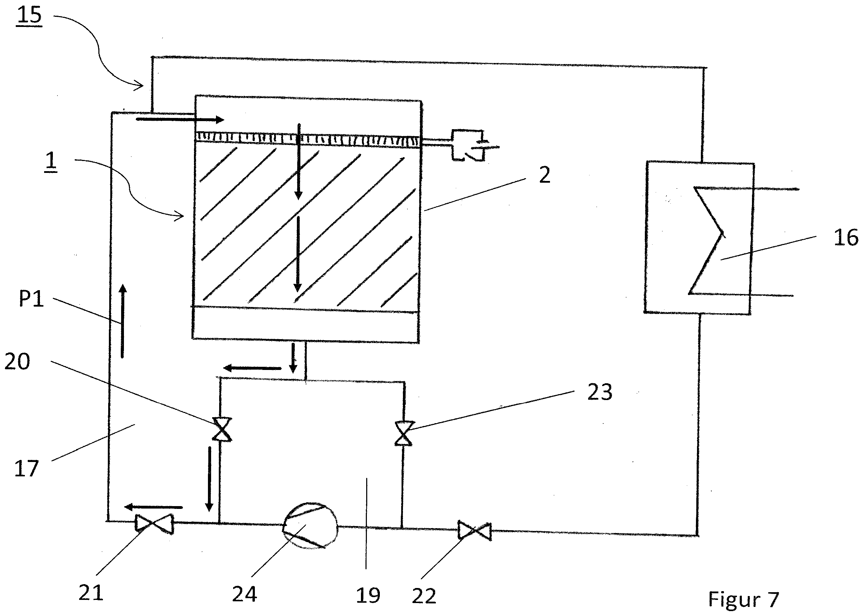

In der Figur 7 ist ein Wärmespeichersystem 15 gezeigt, das eine Wärmespeichervorrichtung 1 gemäß der Figur 1 umfasst. Dabei weist das Wärmespeichersystem 15 neben der Wärmespeichervorrichtung 1 einen Wärmeabnehmer 16 auf. Der Wärmeabnehmer 16 ist über ein Rohrleitungssystem mit der Wärmespeichervorrichtung 1 verbunden.

Ferner ist in der Figur 7 ein Kreislauf 17 gezeigt. Der erste Kreislauf 17 dient einem Beladen der Wärmespeichervorrichtung 1. Unter einem Beladen ist ein Wärmeeintrag in den Speicherbehälter 2 zu verstehen. Mittels der Pfeile P1 wird die Strömungsrichtung des Gases im Kreislauf 17 veranschaulicht. Der Kreislauf 17, der Rohrleitungen umfasst, weist zwei Drosselorgane 23, 21 auf. Mittels der Drosselorgane 23, 21 ist eine Beeinflussung der Fließgeschwindigkeit des Gasstroms erzielbar.

Dabei ist die Wärmespeichervorrichtung 1 (vgl. Figur 1) eingerichtet, über die erste Öffnung 3 ein Gas in den Speicherbehälter 2 zu fördern. Das Heizelement 7 ist eingerichtet, das geförderte Gas aufzuheizen. Die Speichermittel 11, die dem Heizelement 7 nachgeschaltet sind, sind eingerichtet, die Wärme des aufgeheizten Gases zu speichern. Ferner ist die Wärmespeichervorrichtung 1 eingerichtet, über die zweite Öffnung 13, das die Wärme an die Speichermittel 11 abgegebene Gas, das folglich abgekühlt ist, wieder aus dem Speicherbehälter 2 zu fördern.

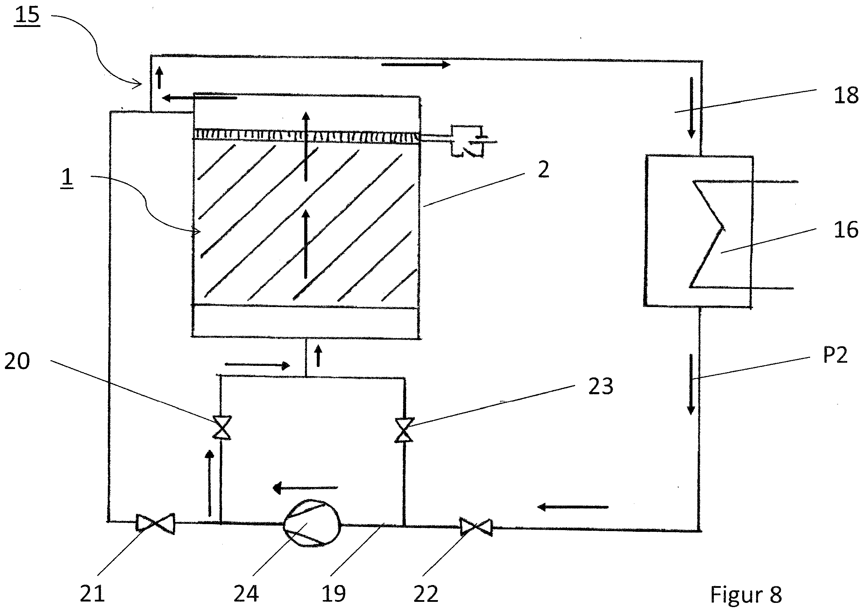

Im Unterschied zur Figur 7 wird in Figur 8 ein Entladen der Wärmespeichervorrichtung gezeigt. In der Figur 8 ist ein zweiter Kreislauf 18 gezeigt. Der zweite Kreislauf 18, der Rohrleitungen umfasst, dient dem Entladen der Wärmespeichervorrichtung 1. Unter dem Entladen ist ein Wärmeaustrag aus dem Speicherbehälter 2 zu verstehen. Mittels der Pfeile P2 wird die Strömungsrichtung des Gases im Kreislauf 18 veranschaulicht. Der Kreislauf 18 weist zwei Drosselorgane 22, 20 auf. Mittels der Drosselorgane 22, 20 ist eine Beeinflussung der Fließgeschwindigkeit des Gasstroms erzielbar.

Dabei ist die Wärmespeichervorrichtung 1 (vgl. Figur 1) eingerichtet, über die zweite Öffnung 13 ein Gas in den Speicherbehälter 2 zu fördern. Die Speichermittel 11 sind eingerichtet, die gespeicherte Wärme an das Gas abzugeben und dieses aufzuheizen. Ferner ist die Wärmespeichervorrichtung 1 eingerichtet, über die mindestens erste Öffnung 3 das aufgeheizte Gas, das das Speichermittel 11 passiert hat, wieder aus dem Speicherbehälter 2 in Richtung zum Abnehmer 16 zu fördern.

Überdies weist das Wärmespeichersystem 15 eine Rohrleitung 19 auf, die ein Gebläse 24 umfasst.

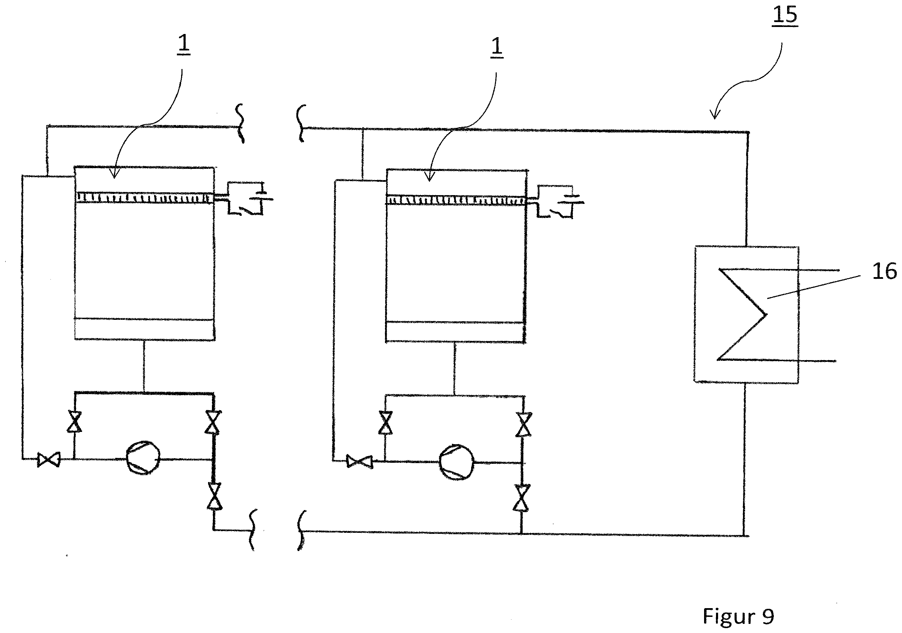

In der Figur 9 ist ein weiteres Wärmespeichersystem 15 gezeigt. Im Unterschied zu dem Wärmespeichersystem 15 gemäß den Figuren 7 und 8 sind neben der einen Wärmespeichervorrichtung 1 weitere Wärmespeichervorrichtungen 1 im Wärmespeichersystem 15 vorhanden, wobei der Übersicht halber lediglich eine weitere dieser mehreren Wärmespeichervorrichtungen 1 gezeigt ist.

Durch das Vorsehen der Wärmespeichervorrichtung 1 bzw. des Wärmespeichersystems 15, wie oben beschrieben, ist es möglich, überschüssige elektrische Energie beispielsweise aus stark schwankenden regenerativen Quellen oder angeschossenen Stromnetzen effizient in Form von Wärme auf hohem Temperaturniveau zu speichern und damit das Stromnetz zu stabilisieren.

### Bezugszeichenliste

- 1: Wärmespeichervorrichtung
- 2: Speicherbehälter
- 3: erste Öffnung
- 4: erste Gasverteilerkammer
- 5: erster Strömungsvergleichmäßiger
- 6: Heizvorrichtung
- 7: Heizelement
- 8: Stromversorgung
- 9: Halterungsmatrix
- 10: zweiter Strömungsvergleichmäßiger
- 11: Wärmespeichermittel
- 12: Halterung
- 13: zweite Öffnung
- 14: zweite Gasverteilerkammer
- 15: Wärmespeichersystem
- 16: Wärmeabnehmer
- 17: Kreislauf
- 18: Kreislauf
- 19: Rohrleitung
- 20: Drosselorgan
- 21: Drosselorgan
- 22: Drosselorgan
- 23: Drosselorgan
- 24: Gebläse
- 25: Anschluss
- 26: Anschluss
- 30: Wabenstruktur (Wabenkörper)
- P1: Pfeil (Strömungsrichtung)
- P2: Pfeil (Strömungsrichtung)

## Patentansprüche

1. Wärmespeichervorrichtung (1) mit einem mindestens zwei Öffnungen (3, 13) aufweisenden Speicherbehälter (2) zur Wärmespeicherung, wobei im Speicherbehälter (2) mindestens ein Heizelement (7) und Wärmespeichermittel (11) angeordnet sind, und wobei die Wärmespeichervorrichtung (1) eine Halterungsmatrix (9) zur Auflagerung des Heizelements (7) aufweist, **dadurch gekennzeichnet, dass** in einer Wärmeeintragsrichtung die Wärmespeichervorrichtung (1) eine erste Gasverteilerkammer (4) umfasst, die dem Heizelement (7) vorgeschaltet ist, und eine zweite Gasverteilerkammer (14) umfasst, die den Speichermitteln (11) nachgeschaltet ist, wobei ein Strömungsvergleichmäßiger (5, 10) beidseitig des Heizelements (7) oder beidseitig von mehreren Lagen von Heizelementen (7) und/oder zwischen diesen Lagen angeordnet ist.

2. Wärmespeichervorrichtung (1) nach Anspruch 1, wobei zum Wärmeeintrag in den Speicherbehälter (2)
- die Wärmespeichervorrichtung eingerichtet ist, über mindestens eine erste Öffnung (3) ein Gas in den Speicherbehälter (2) zu fördern,
- das Heizelement (7) eingerichtet ist, das geförderte Gas aufzuheizen,
- die Speichermittel (11), die dem Heizelement (7) nachgeschaltet sind, eingerichtet sind, die Wärme des aufgeheizten Gases zu speichern, und
- die Wärmespeichervorrichtung eingerichtet ist, das die Wärme an die Speichermittel (11) abgegebene Gas über mindestens eine zweite Öffnung (13) aus dem Speicherbehälter (2) zu fördern.

3. Wärmespeichervorrichtung (1) nach Anspruch 2, wobei zum Wärmeaustrag aus dem Speicherbehälter (2)
- die Wärmespeichervorrichtung (1) eingerichtet ist, über die mindestens zweite Öffnung (13) ein Gas in den Speicherbehälter (2) zu fördern,
- die Speichermittel (11) eingerichtet sind, die gespeicherte Wärme an das Gas abzugeben und dieses aufzuheizen, und
- die Wärmespeichervorrichtung (1) eingerichtet ist, über die mindestens erste Öffnung (3) das aufgeheizte Gas, das das Speichermittel (11) passiert hat, aus dem Speicherbehälter (2) zu fördern.

4. Wärmespeichervorrichtung (1) nach einem der vorherstehenden Ansprüche, wobei Zwischenräume zwischen mindestens zwei benachbarten Heizelementen (7) luftdicht verschlossen sind.

5. Wärmespeichervorrichtung (1) nach einem der vorherstehenden Ansprüche, wobei mindestens zwei Lagen von Heizelementen (7) aufeinander gestapelt sind.

6. Wärmespeichervorrichtung (1) nach einem der vorherstehenden Ansprüche, wobei das mindestens eine Heizelement (7) eine vom Gas durchströmbare elektrisch leitfähige, metallische oder keramische Wabenstruktur (30) umfasst.

7. Wärmespeichervorrichtung (1) nach einem der vorherstehenden Ansprüche, wobei die Heizelemente (7) linienförmig angeordnet sind, mäanderförmig oder spiralförmig verlaufen.

8. Wärmespeichervorrichtung (1) nach einem der vorherstehenden Ansprüche, wobei die Heizelemente (7) in Reihe und/oder parallel geschaltet sind.

9. Wärmespeichersystem (15) umfassend mindestens eine Wärmespeichervorrichtung (1) nach einem der vorherstehenden Ansprüche, wobei die Wärmespeichervorrichtung (1) an einem Wärmeabnehmer (16) angeschlossen ist.

10. Wärmespeichersystem (15) nach einem der vorherstehenden Ansprüche, aufweisend ein Rohrleitungssystem mit mindestens einem Drosselorgan (20, 21, 22, 23) und/oder mindestens einem Gebläse (24).

11. Verfahren zum Betreiben einer Wärmespeichervorrichtung (1) nach einem der vorherstehenden Ansprüche, umfassend die aufeinanderfolgenden Schritte zum Wärmeeintrag in den Speicherbehälter (2):
- Fördern von Gas in den Speicherbehälter (2) durch die erste Öffnung (3),
- Aufheizen des geförderten Gases mittels des Heizelements (7),
- Speichern der Wärme des aufgeheizten Gases mittels der Speichermittel (11), und
- Fördern des Gases, das die Wärme an die Speichermittel (11) abgegeben hat, durch die zweite Öffnung (13) aus dem Speicherbehälter (2).

12. Verfahren zum Betreiben einer Wärmespeichervorrichtung (1) nach Anspruch 11, umfassend die aufeinanderfolgenden Schritte zum Wärmeaustrag aus dem Speicherbehälter (2):
- Fördern von Gas in den Speicherbehälter (2) durch die zweite Öffnung (13),
- Abgabe der Wärme von den Speichermitteln (11) an das geförderte Gas und
- Fördern des Gases, das die Wärme an die Speichermittel (11) abgegeben hat, durch die zweite Öffnung (13) aus dem Speicherbehälter (2).

## Claims

1. A heat storage device (1) comprising a storage container (2) for storing heat, the storage container (2) having at least two openings (3, 13), at least one heating element (7) and heat storing means (11) being disposed in the storage container (2), and the heat storage device (1) having a support matrix (9) for supporting the heating element (7), **characterized in that** the heat storage device (1) comprises a first gas distribution chamber (4) disposed upstream of the heating element (7) and a second gas distribution chamber (14) disposed downstream of the storing means (11) in a heat introduction direction, wherein a flow homogenizer (5, 10) is disposed on either side of the heating element (7) or on either side of multiple layers of heating elements (7) and/or between these layers.

2. The heat storage device (1) according to claim 1, wherein, for introducing heat into the storage container (2),
- the heat storage device is configured to transport a gas into the storage container (2) via at least one first opening (3),
- the heating element (7) is configured to heat the transported gas,
- the storing means (11), which are disposed downstream of the heating element (7), are configured to store the heat of the heated gas, and
- the heat storage device is configured to transport the gas that has transferred the heat to the storing means (11) out of the storage container (2) via at least one second opening (13).

3. The heat storage device (1) according to claim 2, wherein, for withdrawing heat from the storage container (2),
- the heat storage device (1) is configured to transport a gas into the storage container (2) via the at least second opening (13),
- the storing means (11) are configured to transfer the stored heat to the gas and heat the gas, and
- the heat storage device (1) is configured to transport the heated gas that has passed the storing means (11) out of the storage container (2) via the at least first opening (3).

4. The heat storage device (1) according to any one of the preceding claims, wherein spaces between at least two adjacent heating elements (7) are hermetically sealed.

5. The heat storage device (1) according to any one of the preceding claims, wherein at least two layers of heating elements (7) are stacked on top of each other.

6. The heat storage device (1) according to any one of the preceding claims,
wherein the at least one heating element (7) comprises an electrically conductive, metallic or ceramic honeycomb structure (30) through which the gas is able to flow.

7. The heat storage device (1) according to any one of the preceding claims, wherein the heating elements (7) are disposed in a line or extend in a meandering or helical shape.

8. The heat storage device (1) according to any one of the preceding claims, wherein the heating elements (7) are connected in series and/or in parallel.

9. A heat storage system (15) comprising at least one heat storage device (1) according to any one of the preceding claims, wherein the heat storage device (1) is connected to a heat consumer (16).

10. The heat storage system (15) according to any one of the preceding claims, the heat storage system (15) having a pipeline system comprising at least one throttle member (20, 21, 22, 23) and/or at least one fan (24).

11. A method for operating a heat storage device (1) according to any one of the preceding claims, the method comprising the following sequential steps for introducing heat into the storage container (2):
- transporting gas into the storage container (2) through the first opening (3),
- heating the transported gas by means of the heating element (7),
- storing the heat of the heated gas by means of the storing means (11), and
- transporting the gas that has transferred the heat to the storing means (11) out of the storage container (2) through the second opening (13).

12. The method for operating a heat storage device (1) according to claim 11, the method comprising the following sequential steps for withdrawing heat from the storage container (2):
- transporting gas into the storage container (2) through the second opening (13),
- transferring the heat from the storing means (11) to the transported gas, and
- transporting the gas that has transferred the heat to the storing means (11) out of the storage container (2) through the second opening (13).

## Revendications

1. Dispositif (1) d'accumulation de chaleur comprenant un récipient d'accumulation (2) pour accumuler de la chaleur, le récipient d'accumulation (2) ayant au moins deux ouvertures (3, 13), au moins un élément de chauffage (7) et un moyen d'accumulation (11) de chaleur étant disposés dans le récipient d'accumulation (2), et le dispositif (1) d'accumulation de chaleur ayant une matrice de support (9) pour supporter l'élément de chauffage (7), **caractérisé en ce que** le dispositif (1) d'accumulation de chaleur comprend une première chambre (4) de distribution de gaz qui est disposée en amont de l'élément de chauffage (7) et une deuxième chambre (14) de distribution de gaz qui est disposée en aval des moyens d'accumulation (11) dans une direction d'introduction de chaleur, un régularisateur d'écoulement (5, 10) étant disposé des deux côtés de l'élément de chauffage (7) ou des deux côtés de plusieurs couches d'éléments de chauffage (7) et/ou entre ces couches.

2. Dispositif (1) d'accumulation de chaleur selon la revendication 1, dans lequel, pour introduire de la chaleur dans le récipient d'accumulation (2),
- le dispositif d'accumulation de chaleur est configuré pour transporter un gaz dans le récipient d'accumulation (2) via au moins une première ouverture (3),
- l'élément de chauffage (7) est configuré pour chauffer le gaz transporté,
- les moyens d'accumulation (11) qui sont disposés en aval de l'élément de chauffage (7) sont configurés pour accumuler la chaleur du gaz chauffé, et
- le dispositif d'accumulation de chaleur est configuré pour transporter le gaz qui a transmis la chaleur aux moyens d'accumulation (11) hors du récipient d'accumulation (2) via au moins une deuxième ouverture (13).

3. Dispositif (1) d'accumulation de chaleur selon la revendication 2, dans lequel, pour décharger la chaleur du récipient d'accumulation (2),
- le dispositif (1) d'accumulation de chaleur est configuré pour transporter un gaz dans le récipient d'accumulation (2) via l'au moins deuxième ouverture (13),
- les moyens d'accumulation (11) sont configurés pour transmettre la chaleur accumulée au gaz et pour chauffer ledit gaz, et
- le dispositif (1) d'accumulation de chaleur est configuré pour transporter le gaz chauffé qui a passé le moyen d'accumulation (11) hors du récipient d'accumulation (2) via l'au moins première ouverture (3).

4. Dispositif (1) d'accumulation de chaleur selon l'une quelconque des revendications précédentes, dans lequel des espaces entre au moins deux éléments de chauffage (7) adjacents sont fermés hermétiquement.

5. Dispositif (1) d'accumulation de chaleur selon l'une quelconque des revendications précédentes, dans lequel au moins deux couches d'éléments de chauffage (7) sont empilées l'une sur l'autre.

6. Dispositif (1) d'accumulation de chaleur selon l'une quelconque des revendications précédentes, dans lequel l'au moins un élément de chauffage (7) comprend une structure en nid d'abeilles (30) électriquement conductrice, métallique ou céramique à travers laquelle le gaz est capable de s'écouler.

7. Dispositif (1) d'accumulation de chaleur selon l'une quelconque des revendications précédentes, dans lequel les éléments de chauffage (7) sont disposés en ligne ou s'étendent en forme de méandre ou de spirale.

8. Dispositif (1) d'accumulation de chaleur selon l'une quelconque des revendications précédentes, dans lequel les éléments de chauffage (7) sont montés en série et/ou en parallèle.

9. Système (15) d'accumulation de chaleur comprenant au moins un dispositif (1) d'accumulation de chaleur selon l'une quelconque des revendications précédentes, dans lequel le dispositif (1) d'accumulation de chaleur est relié à un consommateur de chaleur (16).

10. Système (15) d'accumulation de chaleur selon l'une quelconque des revendications précédentes, ledit système (15) d'accumulation de chaleur ayant un système de tuyauterie ayant au moins un élément d'étranglement (20, 21, 22, 23) et/ou au moins une soufflante (24).

11. Procédé pour faire fonctionner un dispositif (1) d'accumulation de chaleur selon l'une quelconque des revendications précédentes, ledit procédé comprenant les étapes séquentielles suivantes pour introduire de la chaleur dans le récipient d'accumulation (2),
- transporter du gaz dans le récipient d'accumulation (2) à travers la première ouverture (3),
- chauffer le gaz transporté au moyen de l'élément de chauffage (7),
- accumuler la chaleur du gaz chauffé au moyen des moyens d'accumulation (11), et
- transporter le gaz qui a transmis la chaleur aux moyens d'accumulation (11) hors du récipient d'accumulation (2) à travers la deuxième ouverture (13).

12. Procédé pour faire fonctionner un dispositif (1) d'accumulation de chaleur selon la revendication 11, ledit procédé comprenant les étapes séquentielles suivantes pour décharger la chaleur du récipient d'accumulation (2),
- transporter du gaz dans le récipient d'accumulation (2) à travers la deuxième ouverture (13),
- transmettre la chaleur des moyens d'accumulation (11) au gaz transporté, et
- transporter le gaz qui a transmis la chaleur au moyen d'accumulation (11) hors du récipient d'accumulation (2) à travers la deuxième ouverture (13).
